(19) Europäisches Patentamt
European Patent Office
Office européen des brevets

(11) **EP 4 336 540 A1**

(12) **EUROPEAN PATENT APPLICATION**

(43) Date of publication:
**13.03.2024 Bulletin 2024/11**

(21) Application number: **22195135.3**

(22) Date of filing: **12.09.2022**

(51) International Patent Classification (IPC):
**H01J 35/08** (2006.01) **H01J 35/14** (2006.01)
**H01J 35/30** (2006.01) **H05G 1/52** (2006.01)

(52) Cooperative Patent Classification (CPC):
**H01J 35/08; G01N 23/04; H01J 35/147;
H01J 35/30; H05G 1/52;** G01N 2223/426;
H01J 2235/086

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Excillum AB
164 40 Kista (SE)**

(72) Inventors:
• **NILSSON, Daniel
164 40 KISTA (SE)**
• **LUNDSTRÖM, Ulf
164 40 KISTA (SE)**

(74) Representative: **AWA Sweden AB
Box 45086
104 30 Stockholm (SE)**

(54) **SMALL-TARGET X-RAY SYSTEM**

(57)    An X-ray system comprising an X-ray source; a sample position; a detector arranged to detect X-ray radiation downstream of said sample position; and a controller is disclosed. The X-ray source comprises an electron source arranged to provide an electron beam; a target arranged to produce X-ray radiation upon impact by said electron beam at an electron beam spot, wherein said target comprises a substrate and a target layer, and wherein said target layer exhibits a hole having a diameter smaller than a diameter of the electron beam spot; a deflector for directing the electron beam to a first position on said target where the electron beam spot is formed at a uniform portion of said target layer away from said hole, and to a second position on said target where the electron beam spot is formed at a portion of said target exhibiting said hole. The controller is configured to acquire, using said detector, a first image with the electron beam directed to said first position, and a second image with the electron beam directed to said second position, and to generate a difference image between the first image and the second image. A corresponding method is also disclosed.

(a)        (b)        (c)        Fig. 2

EP 4 336 540 A1

## Description

Technical field

The present disclosure relates to electron-impact x-ray sources.

Background

X-ray radiation can be generated by directing an electron beam onto a target material. A typical prior art X-ray source thus comprises an electron gun to generate the electron beam, and electron optics to direct and focus the electron beam onto the target material. Such electron optics may include magnetic alignment and/or stigmator coils, and electrostatic or magnetic focusing lenses and deflectors. The target material typically comprises a high-Z (e.g. atomic number Z > 20) material that generates X-rays by bremsstrahlung upon electron impact. The target may comprise a target film, e.g. made from tungsten (W), deposited on a target substrate material, e.g. made from diamond. A typical thickness of the target film may be about 0.5 $\mu$m or several micrometers or several tens of micrometers, while a typical thickness of the target substrate may be about 100 $\mu$m or several hundreds of micrometers.

The generated X-ray radiation may be directed for use in, for example, X-ray imaging of a sample or an object.

One type of electron-impact X-ray source is the so-called *transmission type* X-ray sources. In this kind of X-ray sources, the generated X-ray radiation is transmitted through the target and thus propagates generally in the same direction as the electron beam. The target in such X-ray sources is thus often referred to as a *transmission target* (in contrast to a reflection target where the generated X-ray radiation does not penetrate the target material but is instead collected "in reflection" from the target).

Transmission targets generally have the advantage that a smaller X-ray spot can be achieved in the target, and thus potentially enable a higher imaging resolution.

Summary

It is often desired to make the X-ray spot smaller. Reasons for this may be to increase the resolution or decrease the image blur that any spot of limited size inherently generates. The present disclosure is based on a recognition that making the electron beam spot on the target smaller for any given system is limited by the finite electrical current that can be drawn through the focusing coils as well as the inherent repulsion between the electrons forming the electron beam. Various system imperfections may also limit the attainable spot size, e.g. lens aberrations, voltage jitter, vibrations etc). A potential alternative could then be to structure the target film such that it presents a small feature from which X-ray radiation is generated (and where a negligible or acceptably small amount of X-ray radiation is generated outside the small feature). In principle, the X-ray spot size would then become independent of electron beam spot size at the target and instead be defined by the size of the target feature. With this approach, however, the spot size will be limited by the thermal power that can be removed from the small target feature, and to some extent also by background X-ray radiation generated by the target substrate impacted by the electron beam adjacent the target feature.

Thus, known methods of decreasing the X-ray spot size in a transmission type X-ray source have some limitations. When using electron optics to focus the electron beam to a smaller spot there is an inherent limitation due to the available electrical current and the repulsive nature of electron interactions. Furthermore, while the spot size is often defined by the full width at half the maximum intensity, the electron distribution will extend beyond this width and contribute to a widening of the X-ray spot. Interaction between the electrons and the substrate will also contribute to a widening of the X-ray spot. Since the target layer, in order to avoid scatter-induced widening of the electron spot, is typically relatively thin a majority of the incident electrons will penetrate the target layer and be further scattered within the relatively thick substrate. The electron distribution will thus widen and create a secondary source of X-ray radiation with a lower intensity (since the substrate material typically has a low atomic number compared to the target material and thus a low X-ray yield) and a wider distribution (since the electrons will experience multiple scattering events in the thick substrate). The resulting X-ray illumination of the object to be imaged will be the sum of a narrow high intensity distribution, giving a relatively sharp image, and a wide low intensity distribution, giving a blurred image.

In X-ray sources where the target comprises an X-ray generating feature (i.e. a target region that is subjected to the electron beam in its entirety, thereby defining the radiating X-ray spot by its size and geometry) provided on or embedded in a substrate, as briefly discussed above, the performance of the electron optics is less of an issue since electrons not impacting the X-ray generating feature does not contribute to the intended X-ray production. However, interactions between the electrons and the substrate will also in this case create a wide, low-intensity X-ray contribution that will illuminate the object and cause blurring of the resulting image. The relative magnitude of this contribution will be a function of electron energy and target design, independent of exposure time.

The present invention therefore proposes the use of a target exhibiting a small hole in an otherwise uniform target layer. An effective spot size having the size of the hole in the target layer can then be obtained by acquiring a first image with the electron beam directed towards the uniform target away from the hole and a second image with the electron beam directed towards the hole, and then subtracting the second image from the first image. Thereby, very high imaging resolutions can be achieved by making the hole sufficiently small. A further advantage is that the influence of X-ray radiation created from interaction between the electron beam and the substrate may be substantially reduced since the contribution from radiation generated within the substrate will be approximately the same when the electron beam is directed towards the unform target layer as when it is directed towards the hole. Thus, this contribution will cancel out when the two images are subtracted from one another. A trade-off is that subtracting two images will result in a final image with more noise, which implies that the signal-to-noise ratio decreases compared to a hypothetical source with a smaller electron spot or an embedded feature of corresponding size. This trade-off, however, can be compensated for by longer exposure times.

The invention is defined in the appended claims, where the dependent claims relate to preferred embodiments.

Brief description of the drawings

In the following detailed description, reference is made to the accompanying drawings, on which

Fig. 1 schematically shows an X-ray system in accordance with the principles disclosed herein;
Fig. 2 illustrates the use of a target that exhibits a hole;
Fig. 3 shows results from a simulation of the principles disclosed herein;
Fig. 4 shows results from an experimental test of the principles disclosed herein; and
Fig. 5 outlines a method according to the principles disclosed herein.

Detailed description

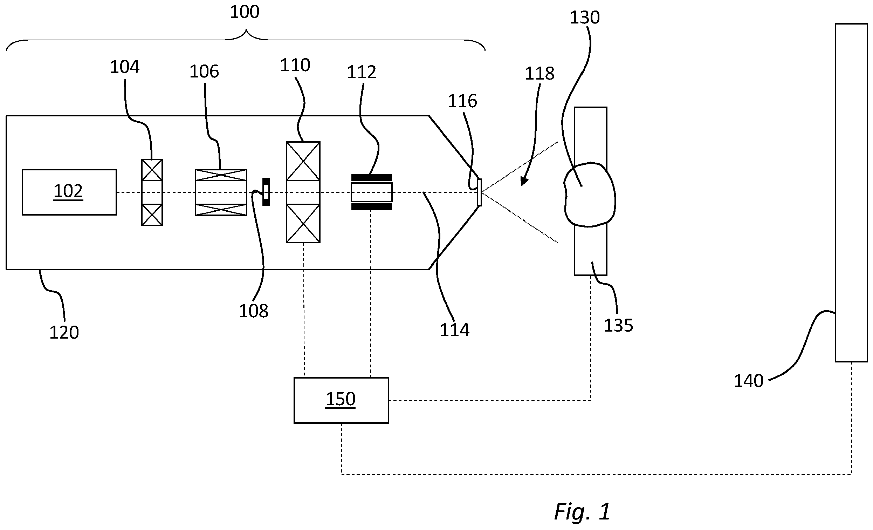

By way of introduction, Figure 1 schematically shows an exemplary X-ray system comprising an X-ray source 100. The X-ray source as shown includes an electron gun 102 configured to form an electron beam 114. The electron beam emitted from the electron gun 102 is aligned and shaped using alignment coils 104 and stigmator coils 106, respectively, before reaching a beam-limiting element in the form of an aperture 108. Such an aperture 108 has the purpose of limiting the geometrical spread of the electron beam before it enters downstream (relative to the propagation direction of the electron beam) beam shaping optics. The aperture 108 typically has a diameter, i.e. opening dimension, in the order of 1 mm. After having passed the aperture 108, the electron beam reaches electron optics, typically comprising one or more focusing lenses 110 and one or more deflectors 112. The electron optics is used for directing and focusing the electron beam to an intended location on a target 116.

The target 116 typically comprises a high-Z (e.g.

atomic number Z > 20) material that generates X-rays 118 upon electron impact. A typical target material in this type of X-ray source is tungsten (W), present as a film on a substrate material, e.g. made from diamond. These components of the X-ray source are enclosed within a low-pressure (vacuum) enclosure 120, although electron optics realized as coils may be situated outside the enclosure. The generated X-ray radiation 118 may be used for imaging a sample or an object 130, located at a sample position, using a detector 140.

The exemplary X-ray source shown in Fig. 1 also includes a controller 150 that, according to the principles disclosed herein, is configured to record, using the detector 140, a first image with the electron beam directed to a first position on the target 116, record a second image with the electron beam directed to a second position on the target 116, and generate a difference image between the first and the second image, e.g. by subtracting pixel values of the second image from corresponding pixel values of the first image. The controller 150 may also be responsible for controlling the lenses 110 and the deflector 112 to direct the electron beam to said positions. As illustrated in Figure 1, the controller 150 may be operationally coupled to the electron optics 110, 112 and the detector 140.

Hence, an X-ray imaging system according to an embodiment comprises an X-ray source 100 as discussed above, a sample position (illustrated by the sample 130 in Figure 1), and a detector 140. The X-ray source 100 comprises an electron source 102 arranged to provide an electron beam, a target 116 arranged to produce X-ray radiation upon impact by the electron beam, means such as electron optics 110, 112 for directing the electron beam to a first position and a second position on the target, and a controller 150 configured to acquire, using the detector, a first image with the electron beam directed to the first position, acquire a second image with the electron beam directed to the second position, and generate a difference image between the first and the second image.

According to the principles disclosed herein, the target layer of the target exhibits a hole having a diameter that is smaller than the diameter of the electron beam spot formed thereon by the electron optics 110, 112. The diameter of the hole may typically be smaller than the smallest electron beam spot achievable using the electron optics 110, 112. The diameter of the hole may, for example, be about 300 nm or less, such as less than 200 nm or less than 100 nm.

While it is preferred that the hole in the target layer is circular, other geometries may be conceivable in some implementations. In such case, it is preferred that the size of the hole along the largest dimension thereof is less than 300 nm (e.g. less than 200 nm or less than 100 nm). For example, the hole may have an elliptical, rectangular or square shape.

The imaging system may also comprise an actuator (not shown) arranged to move the target 116 in relation to the electron beam 114, so that directing the electron beam to the first and second positions may involve steering/deflecting the electron beam using electron optics and/or moving the target. The imaging system may also comprise a manipulator for moving the X-ray source and the sample position in relation to each other. Such manipulator may, for example, be a translation stage 135 to which a sample can be mounted, as shown in Figure 1. Preferably, the manipulator is also operatively connected to the controller 150, as schematically illustrated by a dashed line in Figure 1. The sample manipulator is typically operated so that the first image and the second image of the sample overlap on the detector, that is to say that the image of an object is recorded by the same detector pixels for the first and the second image. In other words, an object located at the sample position is imaged similarly by (i.e. at substantially the same location on) the detector in said first and second images, or a position of an image of the object on the detector is substantially the same for said first image and said second image. In this case no further alignment of the images may be required before performing the subtraction, although alignment for fine tuning may still be implemented. For many applications, where the distance from the sample position to the detector is large as compared to the distance between the X-ray source and sample, the sample may be moved in the same way as the electron beam to accomplish the desired effect, although in principle the sample motion should be scaled with the ratio between the sample to detector distance and the source to detector distance.

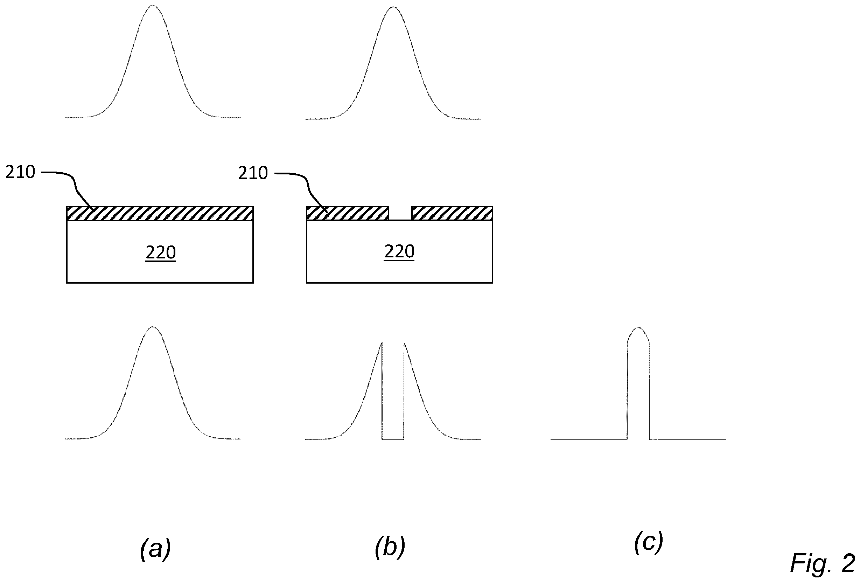

The inventive idea is schematically shown in Fig. 2. At (a) there is shown a portion of the target where the target layer 210 is uniform and thus covers the target substrate 220, and at (b) there is shown a portion of the target where the target layer 210 exhibits a hole, i.e. a region in which target material is absent. The hole may be empty, such that the underlying substrate 220 is exposed, or it may be filled with a suitable low-Z material. The intensity of the incident electron beam is indicated in the top portion of Fig. 2, while the intensity of the X-ray spot is indicated at the bottom portion of Fig. 2. When the electron beam is directed to a part of the target having a uniform target layer, as shown at (a) in Fig. 2, the X-ray spot will have a smooth, gaussian-like energy distribution. When the electron beam is directed to a part of the target that exhibits a hole in the target layer, as shown at (b), the energy distribution in the X-ray spot will have a corresponding dent or dip. By subtracting an image acquired using the X-ray distribution influenced by the hole, as shown at (b), from an image acquired using the X-ray distribution obtained from a uniform part of the target, as shown at (a), the result will be similar to what would have been achieved using a target only generating X-ray radiation from the part of the target corresponding to the hole, as illustrated by the X-ray distribution shown at (c). Hence, an effective X-ray spot having the size of the hole can be achieved. It will be understood that the electron beam may have the same size and intensity profile, as well as nominal power, both when incident upon the uniform portion of the target, as shown at (a), and when incident upon the target portion exhibiting a hole, as shown at (b).

The electron beam may, however, in some implementations have different nominal power when directed to the first target position compared to the second target position. The acquired images may then be scaled, e.g. in view of dynamic range, before making the subtraction to get the difference image.

Further, as will be understood, it may be preferable to make sure that the electron beam is blanked (to prevent X-ray generation) during the shift from the first to the second position and/or that the detector is gated in order to avoid that artifacts appear in the acquired images.

In embodiments of the present invention, the diameter of the hole is preferably less than 300 nm. As discussed above, a reason for making the effective X-ray spot small is to achieve high imaging resolution, i.e. to be able to resolve small details. The size of details that can be resolved will ultimately be limited by diffraction. Therefore, to circumvent diffraction effects, the object may be positioned close to the source. For a transmission target, the distance between the source and the object is, in principle, limited by the thickness of the target (target layer and target substrate). It may thus be advantageous to reduce the target thickness and thereby the source-to-object distance.

A dimensionless number characterizing diffraction is the Fresnel number, $N_F = \dfrac{d^2}{t\lambda}$, where d is the diameter of the object (or source), $t$ is the source-to-object distance, and $\lambda$ is the wavelength. Diffraction effects (Fraunhofer diffraction) will dominate when $N_F$ is below 1. Hence, for an object diameter of 100 nm and an X-ray wavelength of 0.1 nm (corresponding to a photon energy of 12 keV) the source-to-object distance should preferably be less than 100 $\mu$m. Consequently, to be able to utilize the advantages offered by an effective X-ray spot size of 100 nm when it comes to resolving small details, the target thickness (which typically puts a lower limit on the source-to-object distance) should preferably be less than about 100 $\mu$m.

When the first and second images are captured according to the principles disclosed herein, they may not always coincide on the detector since different portions of the target layer are used for generating the X-ray radiation and since the sample may have been moved between the two images. Therefore, in some embodiments, the controller is further configured to align (by shifting and/or rotating) the first and second images before generating the difference image. Such alignment of the images can be implemented by image processing techniques which are known *per se*.

In some implementations, it may also be useful to include other kinds of image processing in the acquisition of the images. For example, the captured images may be cropped to eliminate parts of the images that are not of any interest. Other image processing techniques that may become useful in the acquisition of the images are noise reduction, scaling, compression, thresholding, image formatting, etc. Thresholding, for example, where relative intensity values below a threshold are set to zero or relative values above a threshold are set to one, can be useful to eliminate background artifacts outside a region of interest in the images.

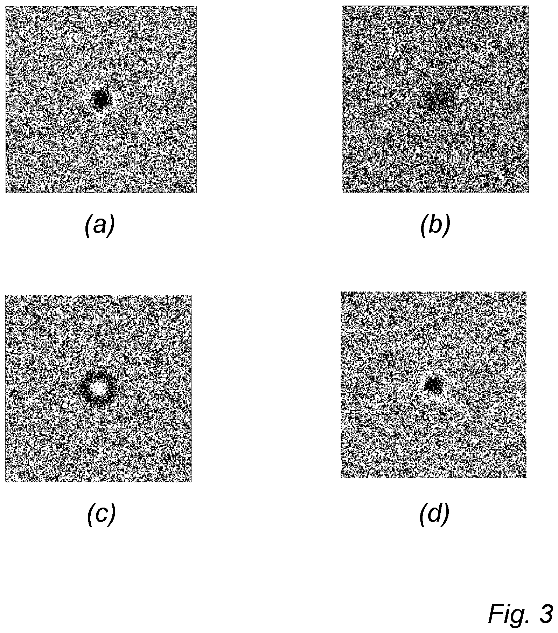

Fig. 3 shows simulation results of X-ray images of a gold cube, having 100 nm sides, located at a distance of 100 $\mu$m from a 10 keV X-ray source. The simulation had an ideal detector with 100 $\mu$m pixels placed one meter from the source. The field of view in Fig. 3 is 2 $\mu$m by 2 $\mu$m and the images are shown in black-and-white after suitable thresholding. Fig. 3(a) shows a simulated image acquired using a 100 nm wide top-hat source spot distribution, and as expected the gold cube is clearly visible. Phase contrast dominates over absorption and diffraction makes the cube look circular rather than square in the image. With a 300 nm gaussian spot, the image shown in Fig. 3(b) was obtained in the simulation. It can be noted that the contrast is lower, but the cube is still discernible. Using a 300 nm gaussian spot with a center 100 nm top-hat disc missing in the radiation, the image shown in Fig. 3(c) was obtained, presenting an inverted contrast. Finally, subtracting the image in Fig. 3(c) from the image in Fig. 3(b) the image shown in Fig. 3(d) was obtained, which is very similar to the image shown in Fig. 3(a) as expected. The image shown in Fig. 3(d), however, is slightly noisier. The signal-to-noise ratio obtained by this subtraction method is about half of that obtained for the 100 nm spot; thus, the subtraction method using a hole in the target layer is expected to require about 4x the exposure time to achieve the same image quality.

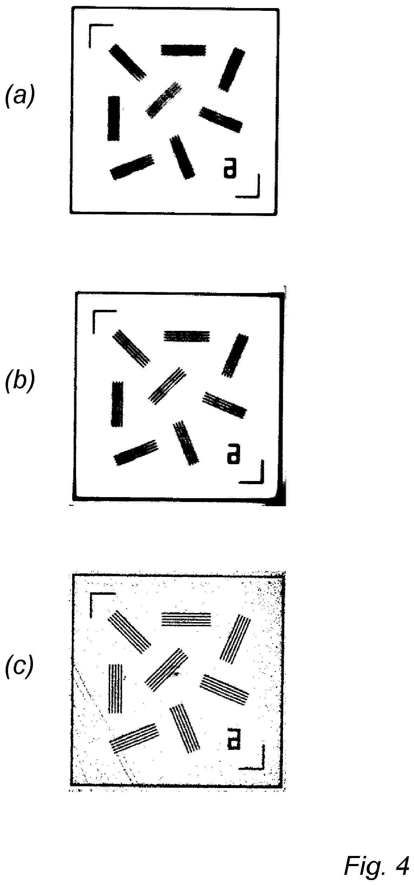

Results from an experimental test of the technology proposed herein are shown in Fig. 4. In these experimental tests, the size of the electron beam spot on the target was about 12 $\mu$m (full width at half maximum). The field of view in Fig. 4 is about 850 $\mu$m and the images are shown in black-and-white after suitable thresholding. The image in Fig. 4(a) was acquired with the electron beam directed towards a normal working point on the target, i.e. a uniform target layer was used for generating the X-ray radiation. The image in Fig. 4(b) was acquired with the electron beam directed towards a portion of the target layer exhibiting a hole having a diameter of 3 $\mu$m. Finally, the image in Fig. 4(c) was obtained by subtracting the image in Fig. 4(b) from the image in Fig. 4(a).

The final difference image in Fig. 4(c) shows the improvement in resolution achieved using the inventive technique. From the images in Figs. 4(a) and (b) it is not evident that the eight rectangular shapes comprise five parallel bars (6 $\mu$m wide with 6 $\mu$m spacing), while this fact is clearly seen in the difference image of Fig. 4(c).

When acquiring the X-ray images shown in Fig. 4, the sample was not moved between the images, but the images were instead shifted a distance corresponding to the difference in electron beam positions. Thus, the artifacts appearing in the background of the difference image are likely due to secondary X-ray radiation generated upstream of the electron beam deflectors. By instead moving the sample between the two image exposures, so that the image of the sample does not move on the detector, the effect of this secondary radiation may be eliminated, or at least considerably reduced.

It can also be noted that the difference image in Fig. 4(c) has more background noise than the two actually acquired X-ray images. This is expected since when adding or subtracting two stochastic variables, the variance of the result will be the sum of the variances of the two variables. This means that the standard deviation of the difference image should be expected to be a factor

$$\sqrt{2} \approx 1.4$$

larger than the standard deviation of one of the images. To improve the signal-to-noise ratio of the final difference image, the exposure time for the two acquired X-ray images may be increased. The signal-to-noise ratio is expected to increase as the square root of the number of detected X-ray photons, and thus as the square root of the integration time, i.e. to double the signal-to-noise ratio the exposure time should increase by a factor of four.

Although a comparatively large target hole of 3 $\mu$m diameter was used for the experimental test of Fig. 4, it clearly shows the increased resolution obtained using the technology disclosed herein.

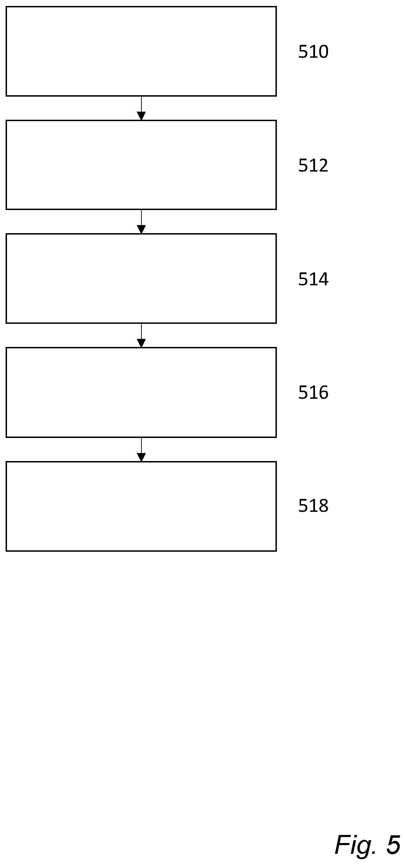

A method for X-ray imaging according to the present invention is schematically illustrated in Fig. 5. As discussed above, the method is performed using an X-ray source having a target arranged to produce X-ray radiation upon impact by an electron beam at an electron beam spot, wherein the target comprises a substrate and a target layer, and wherein the target layer exhibits a hole having a diameter smaller than a diameter of the electron beam spot formed on the target layer. The method comprises a step 510 of directing the electron beam to a first position on the target where the electron beam spot is formed at a uniform portion of the target layer away from the hole. At step 512, a first X-ray image is acquired using a detector while the electron beam is directed to the first position. At step 514, the electron beam is directed to a second position on the target where the electron beam spot is formed at a portion of the target exhibiting the hole, and at step 516 a second X-ray image is acquired using the detector while the electron beam is directed to the second position. Finally, at step 518, a difference image between the first image and the second image is generated.

As will be understood, the order of acquiring the first and second images can be reversed. It is of course immaterial whether one of the images is acquired before the other or vice versa.

The steps of directing the electron beam, acquiring the images, and generating the difference image are typically performed under the control of one or more processors in the X-ray system. The present invention can thus also be implemented as computer software comprising instructions, e.g. stored on a non-transitory computer-readable medium, which when executed cause one or more processors in the X-ray system to perform steps 510-518 discussed above.

**Claims**

1. An X-ray system comprising:

   an X-ray source;
   a sample position;
   a detector arranged to detect X-ray radiation downstream of said sample position;
   a controller;
   wherein said X-ray source comprises:

       an electron source arranged to provide an electron beam;
       a target arranged to produce X-ray radiation upon impact by said electron beam at an electron beam spot, wherein said target comprises a substrate and a target layer, and wherein said target layer exhibits a hole having a diameter smaller than a diameter of the electron beam spot;
       a deflector for directing the electron beam to a first position on said target where the electron beam spot is formed at a uniform portion of said target layer away from said hole, and to a second position on said target where the electron beam spot is formed at a portion of said target exhibiting said hole;

   wherein said controller is configured to acquire, using said detector, a first image with the electron beam directed to said first position, and a second image with the electron beam directed to said second position, and to generate a difference image between the first image and the second image.

2. The X-ray system according to 1, wherein the diameter of said hole is less than 300 nm.

3. The X-ray system according to 1 or 2, wherein a thickness of the target is less than

$$\frac{d^2}{\lambda},$$

where d is the diameter of said hole and $\lambda$ is the wavelength of the X-ray radiation.

4. The X-ray system according to any one of claims 1-3, wherein the controller is further configured to align the first and second images before generating said difference image.

5. The X-ray system according to any one of claims 1-4, further comprising a sample manipulator, and wherein the controller is further configured to move the sample position using said sample manipulator so that an object located at the sample position is imaged at substantially the same location on the detector in said first and second images.

6. The X-ray system according to any one of claims 1-5, wherein the target layer comprises tungsten.

7. The X-ray system according to any one of claims 1-6, wherein the substrate comprises diamond.

8. A method for X-ray imaging using an X-ray source, the X-ray source comprising:

   an electron source arranged to provide an electron beam; and
   a target arranged to produce X-ray radiation upon impact by said electron beam at an electron beam spot, wherein said target comprises a substrate and a target layer, and wherein said target layer exhibits a hole having a diameter smaller than a diameter of the electron beam spot;

   the method comprising:

   directing said electron beam to a first position on said target where the electron beam spot is formed at a uniform portion of said target layer away from said hole;
   acquiring, using a detector, a first X-ray image while said electron beam is directed to said first position;
   directing said electron beam to a second position on said target where the electron beam spot is formed at a portion of said target exhibiting said hole;
   acquiring, using said detector, a second X-ray image while said electron beam is directed to said second position; and
   generating a difference image between the first image and the second image.

9. The method of claim 8, wherein the diameter of said hole is less than 300 nm.

10. The method of claim 8 or 9, wherein a thickness of the target is less than

$$\frac{d^2}{\lambda},$$

where $d$ is the diameter of said hole and $\lambda$ is the wavelength of the X-ray radiation.

11. The method of any one of claims 8-10, further comprising aligning the first and second images before generating said difference image.

12. The method of any one of claims 8-11, further comprising moving the sample position so that an object located at the sample position is imaged at substantially the same location on the detector in said first and second images.

13. The method of any one of claims 8-12, wherein acquiring the X-ray images comprises applying image processing to the first and/or the second X-ray image before generating the difference image.

14. The method of claim 13, wherein the image processing involves any of noise reduction, scaling, compression, thresholding, formatting and/or cropping.

Fig. 1

210 — 

210 — 

220

220

*(a)*

*(b)*

*(c)*

*Fig. 2*

(a)

(b)

(c)

(d)

*Fig. 3*

(a)

(b)

(c)

*Fig. 4*

510

512

514

516

518

*Fig. 5*

Europäisches Patentamt
European Patent Office
Office européen des brevets

# EUROPEAN SEARCH REPORT

**Application Number**

EP 22 19 5135

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/233734 A1 (TSUJINO KAZUYA [JP] ET AL) 29 July 2021 (2021-07-29) * see fig. 1 - 5 and the description thereof * ----- | 1-14 | INV. H01J35/08 H01J35/14 H01J35/30 H05G1/52 |
| A | JP 2002 195961 A (SHIMADZU CORP) 10 July 2002 (2002-07-10) * the whole document * ----- | 1-14 | |

**TECHNICAL FIELDS SEARCHED (IPC)**

H01J
H05G

The present search report has been drawn up for all claims

| Place of search | Date of completion of the search | Examiner |
|---|---|---|
| Munich | 3 February 2023 | Angloher, Godehard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

EP 4 336 540 A1

## ANNEX TO THE EUROPEAN SEARCH REPORT
## ON EUROPEAN PATENT APPLICATION NO.

EP 22 19 5135

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2023

| Patent document cited in search report | | Publication date | Patent family member(s) | | Publication date |
|---|---|---|---|---|---|
| US 2021233734 | A1 | 29-07-2021 | CN | 112912987 A | 04-06-2021 |
| | | | EP | 3872834 A1 | 01-09-2021 |
| | | | JP | 6695011 B1 | 20-05-2020 |
| | | | JP | WO2020084664 A1 | 15-02-2021 |
| | | | KR | 20210057788 A | 21-05-2021 |
| | | | TW | 202038281 A | 16-10-2020 |
| | | | US | 2021233734 A1 | 29-07-2021 |
| | | | WO | 2020084664 A1 | 30-04-2020 |
| JP 2002195961 | A | 10-07-2002 | NONE | | |

EPO FORM P0459